# FASCICULE DE BREVET EUROPEEN

(11) **EP 1 704 700 B1**
(45) Date de publication et mention de la délivrance du brevet: **07.11.2007**
(21) Numéro de dépôt: 05717665.3
(22) Date de dépôt: 13.01.2005
(51) Int. Cl.: H04L 29/06, H04L 29/08

(54) **PROCEDE ET SYSTEME POUR L' EXPLOITATION D'UN RESEAU INFORMATIQUE DESTINE A LA PUBLICATION DE CONTENU**
VERFAHREN UND SYSTEM ZUM BETREIBEN EINES COMPUTERNETZWERKS, DAS FÜR INHALTSVERÖFFENTLICHUNGEN BESTIMMT IST
METHOD AND SYSTEM FOR OPERATING A COMPUTER NETWORK WHICH IS INTENDED FOR CONTENT PUBLISHING

(30) Priorité: 14.01.2004 FR 0450079
(43) Date de publication de la demande: 27.09.2006
(73) Titulaire: STG Interactive, 75016 Paris (FR)
(72) Inventeur: TAMAS, Alexis, F-75016 PARIS (FR); GRIMBERT, Amaury, F-75003 Paris (FR)
(74) Mandataire: Bredema
(86) Numéro de dépôt international: PCT/FR2005/050019
(87) Numéro de publication internationale: WO 2005/074225

(56) Documents cités:
- EP-A- 0 817 444
- US-A- 6 003 030
- HULSEBOSCH B: "Framework for Secure Personalised Content Delivery" TELEMATICA INSTITUUT, [Online] 23 janvier 2002 (2002-01-23), XP002301817 Extrait de l'Internet: URL:https://doc.telin.nl/dscgi/ds.py/Get/F ile-19930/Framework.pdf> [extrait le 2004-10-19]

## Description

La présente invention se rapporte au domaine des Technologies de l'Information et de la Communication.

La présente invention se rapporte plus particulièrement au domaine de la publication de contenu.

L'art antérieur connaît déjà, par la demande de brevet PCT WO 01/95147 (STG Interactive SA), un système de publication de données multimédias comprenant un serveur connecté à un réseau informatique et une pluralité de terminaux hôtes raccordés audit réseau informatique, le serveur comprenant une base de données dans laquelle sont enregistrées des fiches numériques contenant des descripteurs de pages multimédias et un logiciel pour la gestion de la base de données et des échanges avec les terminaux hôtes, les terminaux hôtes étant munis d'une mémoire vive pour l'enregistrement temporaire de fiches numériques téléchargées à partir de la base de données du serveur et un logiciel de consultation spécifique pour la représentation visuelle des fiches en fonction des descripteurs d'une page téléchargée, caractérisé en ce que certaines fiches numériques au moins comprennent des descripteurs de deux modes au moins de représentation.

On connaît bien également le langage FDSL (Frogans Slide Description Language), un langage XML simple à utiliser qui permet de développer, publier des contenus et manipuler des objets informatiques de type Frogans (marque déposée par STG Interactive SA).

Un problème technique fondamental dans la mise en oeuvre et la gestion d'un réseau informatique réside dans l'identification de la topologie des serveurs et la résolution d'adresses.

Le système classique du DNS *(Domain Name System)* a depuis de nombreuses années démontré sa fiabilité et sa robustesse. Cependant, ce système n'est pas conçu pour que l'on puisse lui adjoindre facilement des fonctionnalités avancées, en particulier en ce qui concerne les descriptions des contenus et leur accessibilité. Sa fonctionnalité principale reste la résolution d'adresses *(lookup).*

Le brevet US-A-6003030 divulge un procédé d'exploitation d'un réseau informatique selon lequel un poste client muni d'un logiciel informatique spécifique peut consulter d'objets informatiques hébergés par un opérateur de réseau. Le procédé comprend l'enregistrement de la part de l'opérateur d'une liste de serveurs de contenu attribuant à chacun des serveurs un coefficient représentatif de sa capacité de traitement, et la résolution d'une adresse d'un serveur approprié pour fournir de contenu au poste cliente.

La présente invention entend remédier aux inconvénients de l'art antérieur en proposant un procédé technique pour l'exploitation d'un réseau informatique qui est particulièrement adapté à la publication de contenu et notamment à la consultation d'objets informatiques. Ce procédé et le système associé présentent de nombreux avantages par rapport à ce qui est connu dans l'art antérieur. En particulier, le procédé selon l'invention présente de nombreuses fonctionnalités avancées.

Alors que les systèmes de publication de fiches numériques classiques (de type Web par exemple) possèdent une organisation libre, obscure et presque anarchique, le procédé selon l'invention permet d'obtenir un référencement clair, ainsi qu'un nommage précis du contenu. L'utilisation d'un réseau informatique mettant en oeuvre le procédé selon l'invention donne la capacité aux diffuseurs d'avoir un meilleur contrôle du contenu qu'ils publient, et de la diffusion de ce contenu. Par exemple, un utilisateur pourra avoir accès à une fiche descriptive d'un contenu avant d'avoir à charger au préalable ce contenu depuis le serveur vers son logiciel de consultation spécifique, ce qui conduit à une optimisation des ressources réseau.

En première lecture, on pourra distinguer au moins trois niveaux d'avantages très importants de l'invention :

### • Accessibilité pour l'utilisateur

Des descripteurs permettent par exemple d'indiquer si le contenu est en ligne, si un filtre est présent ou non pour la protection des mineurs vis-à-vis d'un contenu réservé aux adultes, et si et de quelle façon les utilisateurs doivent s'authentifier pour accéder au contenu.

### • Connexion au serveur

Des descripteurs permettent par exemple d'indiquer le protocole de connexion (http...) et la fiche de référence *(home-slide).*

### • Format de contenu

Des descripteurs permettent par exemple d'indiquer la version du langage de publication utilisée ainsi que le format d'encodage.

De plus, le procédé selon l'invention permet de gérer un cache de façon optimisée qui permet de réduire le trafic réseau et améliorer le temps d'accès.

Ainsi, le procédé selon l'invention est extrêmement agréable pour un utilisateur final : il est très simple, très cohérent, très ergonomique et ne nécessite pas de paramétrage technique complexe. L'invention apporte également beaucoup d'avantages à l'administrateur du réseau : il est moins sollicité par les utilisateurs, peut se concentrer sur des tâches plus intéressantes et de plus haut niveau. L'invention procure à l'administrateur du réseau des gains très significatifs en termes de productivité, de performances et de satisfaction dans son travail.

De plus, l'invention procure à un gestionnaire de droits le contrôle sur des opérateurs de réseaux informatiques. Le gestionnaire de droits délègue la possibilité de gérer un réseau au moyen d'une clé numérique, dite clé racine. Un opérateur de réseau gèrera ensuite son réseau au moyen d'une autre clé numérique, dite clé de réseau.

En outre, le procédé selon l'invention permet d'obtenir la signature de l'ensemble des fonctions d'exploitation d'un réseau informatique alors que, de façon conventionnelle, on ne peut qu'obtenir la signature de contenus publiés à travers un réseau informatique.

À cet effet, la présente invention concerne, dans son acception la plus générale, un procédé d'exploitation d'un réseau informatique, ledit réseau comportant d'une part une pluralité de serveurs informatiques et au moins un poste client muni d'un logiciel informatique spécifique pour la consultation de pages numériques, et reliant au moins deux entités distinctes : un gestionnaire de droits et un ou plusieurs opérateur(s) de réseau(x), caractérisé en ce qu'il comprend :
- une étape préalable d'initialisation du réseau informatique au moyen de deux documents numériques signés par le gestionnaire de droits avec une clé racine, l'un étant un certificat numérique dudit réseau et l'autre un document contenant des liens vers des pages numériques permettant d'accéder audit certificat numérique du réseau ;
- une étape d'identification de la topologie du réseau conduisant :
   - à l'obtention d'une liste de serveurs L1,
   - à l'enregistrement d'un document numérique contenant ladite liste L1, ce document numérique étant signé par l'opérateur de réseau au moyen d'une clé de réseau, et
   - à l'attribution à chacun des serveurs de ladite liste L1 d'un coefficient notamment représentatif de sa capacité de traitement ;
- une étape de résolution d'une adresse au moyen d'un serveur d'obtention d'adresse (dit serveur de *lookup),* cette étape étant mise en oeuvre au moyen de deux documents numériques, l'un destiné à la gestion d'erreurs et l'autre contenant les paramètres de l'adresse, ces documents numériques étant signés par l'opérateur de réseau au moyen de la clé de réseau ;
- une étape de consultation, à partir dudit logiciel spécifique, d'objets informatiques hébergés sur le (ou les) serveur(s) spécifié(s) dans les paramètres de l'adresse ;
- le certificat numérique de l'étape d'initialisation du réseau informatique contenant des informations de nature administrative et technique permettant à l'utilisateur d'accéder au réseau, les informations de nature technique contenant notamment la partie publique de la clé du réseau.

De préférence, le procédé comporte en outre une étape préalable d'installation sur le poste client du logiciel spécifique pour la consultation de pages numériques.

Avantageusement, le procédé comporte en outre une étape de mise à jour sur le poste client du logiciel spécifique pour la consultation de pages numériques, cette mise à jour étant gérée par un serveur informatique au moyen d'un document numérique de statut et d'un document numérique de mise à jour, ces documents étant signés par le gestionnaire de droits au moyen de la clé racine et ces documents étant en outre spécifiques à la plate-forme du poste client.

Selon une variante préférée, un ou plusieurs desdits serveurs informatiques sont des serveurs dédiés à l'assistance technique des utilisateurs [aide].

Selon une variante particulièrement avantageuse, le procédé met en oeuvre des mécanismes de répartition de charge entre les différents serveurs *[load balancing].*

Selon un mode d'exécution préférentiel, le procédé met en oeuvre des mécanismes de ré-attribution du service en cas d'indisponibilité d'un serveur *[fail over].*

Selon une variante préférée, un des paramètres de l'adresse est un indicateur numérique filtrant prenant en compte le contenu de pages numériques correspondantes, par exemple mais non exclusivement dans le but de gérer l'autorisation de la consultation de ces pages en fonction de l'age de l'utilisateur *[filtre numérique pour la protection des mineurs].*

Selon un mode de mise en oeuvre particulier, l'activité dudit opérateur se situe au niveau d'un réseau public, par exemple le réseau Internet.

Selon un autre mode de mise en oeuvre particulier, l'activité dudit opérateur se situe au niveau d'au moins un réseau informatique privé [par exemple du type IP].

De préférence, les documents numériques possèdent un format compatible XML.

Avantageusement, le logiciel spécifique sur le poste client distingue différents réseaux lors d'une phase d'identification et rend possible une utilisation simultanée des différents réseaux informatiques.

Selon une variante particulière, le gestionnaire de droits se décompose en une pluralité de gestionnaires de droits.

Avantageusement, le procédé met en oeuvre un cache, par exemple mais non nécessairement au niveau dudit logiciel spécifique pour la consultation sur le poste client.

De préférence, ledit cache possède une double durée de validité : une relative par rapport à un événement donné et une absolue, qui correspond à une date d'expiration prédéterminée.

Selon un mode de mise en oeuvre particulier, ledit événement est le chargement d'un desdits documents numériques.

Selon un mode de réalisation particulièrement avantageux, la liste de serveurs L1 comporte en outre des indicateurs représentatifs de la localisation géographique desdits serveurs.

Selon une variante particulière, l'étape d'initialisation du réseau informatique est mise en oeuvre de façon automatique et est réalisée uniquement au moyen dudit certificat numérique.

Selon un mode de mise en oeuvre particulier, l'étape d'initialisation du réseau informatique mise en oeuvre de façon automatique utilise des adresses pré-determinées.

Selon une variante, à l'étape d'identification de la topologie du réseau, le document numérique est signé par le gestionnaire de droits au moyen de la clé de réseau, cette clé de réseau étant alors conservée par le gestionnaire de droits.

Selon un mode de réalisation, à l'étape de résolution d'adresse, les documents numériques sont signés par le gestionnaire de droits au moyen de la clé de réseau, cette clé de réseau étant alors conservée par le gestionnaire de droits.

Avantageusement, le procédé comporte en outre une étape de validation de la partie publique de la clé de réseau, par la fourniture de la signature d'une chaîne de caractères prédéterminée au moyen de la clé de réseau.

De préférence, chaque document numérique possède un identifiant unique déterminé en partie par le gestionnaire de droits et en partie par l'opérateur de réseau.

Selon une première variante, la signature est incluse dans le document, pour chacun des documents numériques.

Selon une seconde variante, la signature est référencée par le document et n'est pas incluse dans le document, pour chacun des documents numériques.

Selon un mode de mise en oeuvre préféré, les paramètres de l'adresse définissent si un utilisateur doit s'authentifier ou non pour accéder à un contenu, et s'il doit s'authentifier, par quel moyen il devra l'effectuer.

Avantageusement, les paramètres de l'adresse définissent le format du contenu à publier.

Selon une variante particulièrement avantageuse, des couleurs différentes peuvent être utilisées dans l'affichage des adresses des différents réseaux informatiques.

Selon une variante préférée, le document numérique contenant les paramètres de l'adresse (document de *lookup)* contient en outre un certificat destiné à authentifier un serveur de contenu.

En outre, la présente invention se rapporte également à un procédé de communication numérique entre au moins deux équipements sur un réseau informatique exploité conformément au procédé d'exploitation présenté précédemment caractérisé en ce que lors d'au moins une des étapes de procédé, les données numériques échangées entre les deux équipements comportent au moins une adresse dont le format possède un en-tête correspondant au nom du réseau et un descripteur déterminé par un producteur de contenu.

Selon une variante préférée, l'étape de procédé en question est l'étape de résolution d'adresse.

Enfin, la présente invention se rapporte également à un système d'exploitation d'un réseau informatique, ledit réseau comportant d'une part une pluralité de serveurs informatiques et au moins un poste client muni d'un logiciel spécifique pour la consultation de pages numériques, et reliant au moins deux entités distinctes : un gestionnaire de droits et au moins un opérateur de réseau.

On comprendra mieux l'invention à l'aide de la description, faite ci-après à titre purement explicatif, d'un mode de réalisation de l'invention, en référence aux figures annexées :
- la Figure 1 illustre un exemple de système mettant en oeuvre le procédé selon l'invention ; et
- les Figures 2 et 3 sont des schémas représentant les flux d'échanges de documents entre le gestionnaire de droits, un opérateur de réseau et le logiciel spécifique sur le poste utilisateur.

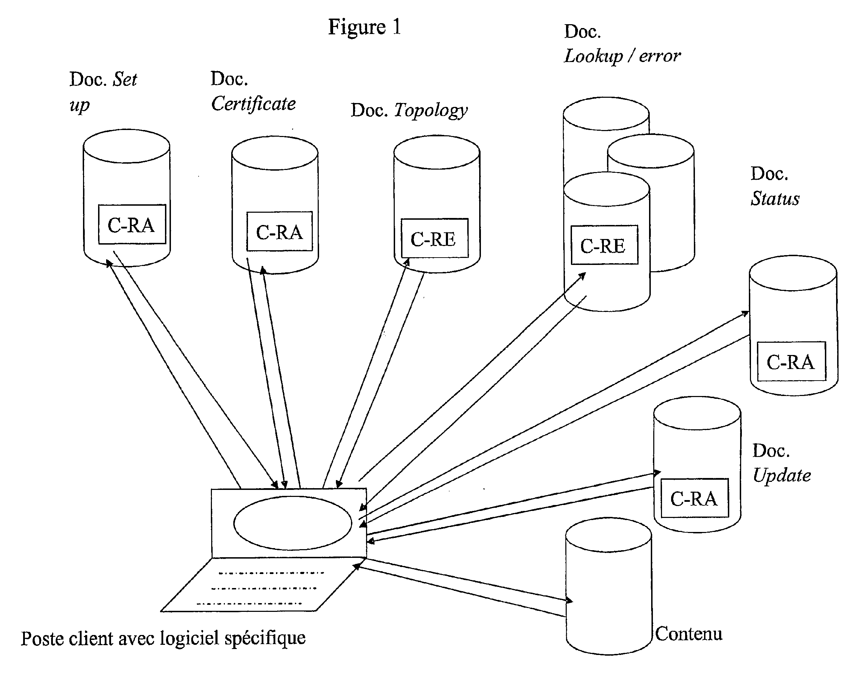

Le procédé selon l'invention est mis en oeuvre dans le système illustré Figure 1. Un logiciel spécifique pour la consultation de contenu est installé sur un poste client. Des échanges d'informations sont réalisés entre ce logiciel et différents serveurs. Cet agencement n'est pas le seul envisageable : on peut regrouper des fonctions différentes sur un seul serveur. L'objectif final est la consultation de contenu hébergé sur un serveur dédié, cette consultation étant dépendante des paramètres de l'adresse et s'effectuant à l'aide dudit logiciel spécifique installé sur le poste client.

Sur la Figure 1, l'indicateur « C-RA » indique que le document est signé par la clé racine et l'indicateur « C-RE » indique que le document est signé par la clé de réseau.

Dans notre exemple de réalisation, le certificat numérique nécessaire pour l'initialisation d'un réseau comprend les champs suivants :
- le nom du réseau informatique
- un identifiant unique
- une durée de validité relative
- une date d'expiration
- le nom de l'opérateur
- l'adresse de l'opérateur
- le type, la description, la référence, la date d'expiration et le fournisseur de la licence
- une URL vers un site Web d'aide
- les couleurs des adresses et du fond des adresses du réseau informatique
- les emplacements des documents numériques « certificate », « topology » et « status »
- la longueur et l'exposant de la clé publique (pour un chiffrement de type RSA)
- la partie publique de la clé de réseau ainsi qu'une « empreinte de vérification » de cette clé
et enfin une signature du document par la clé racine.

Dans notre exemple de réalisation, le fichier de *lookup* (résolution d'adresse) comprend les champs suivants :
- le nom du réseau informatique
- un identifiant numérique
- une durée de validité relative
- une date d'expiration
- une adresse de contenu à publier
- une indication sur la mise en ligne ou non du contenu
- une indication de filtrage (par exemple : contenu pour adulte exclusivement ou non)
- une date d'expiration de l'adresse
- une indication sur le mode d'authentification de l'utilisateur
- un descripteur du protocole de connexion
- l'emplacement du contenu
- l'emplacement d'une fiche de référence *(home-slide)*
- la version et l'encodage du langage de publication du contenu
- des indications sur l'appartenance du contenu à des chaînes thématiques, groupes, familles...
et enfin une signature du document par la clé de réseau.

L'étape éventuelle de mise à jour du logiciel spécifique sur le poste client fait intervenir deux documents numériques : celui de statut et celui de mise à jour.

Le document numérique de statut *(status)* liste les versions du logiciel en activité et le document numérique de mise à jour *(update)* contient la dernière version du logiciel.

Trois états différents peuvent être donnés dans le fichier de statut :
- A jour (OK)
- Date d'expiration proche (recommandation de mise à jour)
- Obsolète (mise à jour nécessaire).

Lors de la ré-ouverture d'une adresse du réseau depuis le logiciel spécifique, seules certaines étapes sont exécutées en fonction : de l'expiration ou non du certificat, de l'expiration ou non de la topologie puis de l'expiration ou non du *lookup* dans le cache.

Les tableaux I et II indiquent *« qui signe quel document, et au moyen de quelle clé* » dans deux cas : le cas général avec délégation et le cas sans délégation.

**TABLEAU I : Signature des documents numériques dans le cas général : avec délégation.**

| | Gestionnaire des droits (signature au moyen de la clé racine) | Opérateur de réseau (signature au moyen de la clé de réseau) |
|---|---|---|
| Document *setup* | OUI | NON |
| Document *certificate* | OUI | NON |
| Document *topology* | NON | OUI |
| Documents *lookup*/*error* | NON | OUI |
| Document *status* | OUI | NON |
| Document *update* | OUI | NON |

**TABLEAU II : Signature des documents numériques dans le cas sans délégation.**

| | Gestionnaire des droits (signature au moyen de la clé racine ou de la clé de réseau) | Opérateur de réseau (n'a pas de clé) |
|---|---|---|
| Document *setup* | OUI (avec clé racine) | NON |
| Document *certificate* | OUI (avec clé racine) | NON |
| Document *topology* | OUI (avec clé de réseau) | NON |
| Documents *lookup*/*error* | OUI (avec clé de réseau) | NON |
| Document *status* | OUI (avec clé racine) | NON |
| Document *update* | OUI (avec clé racine) | NON |

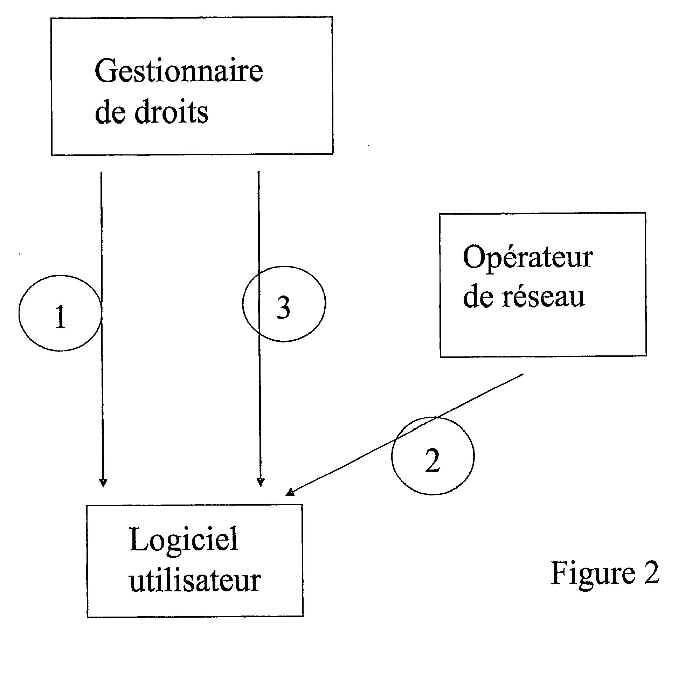

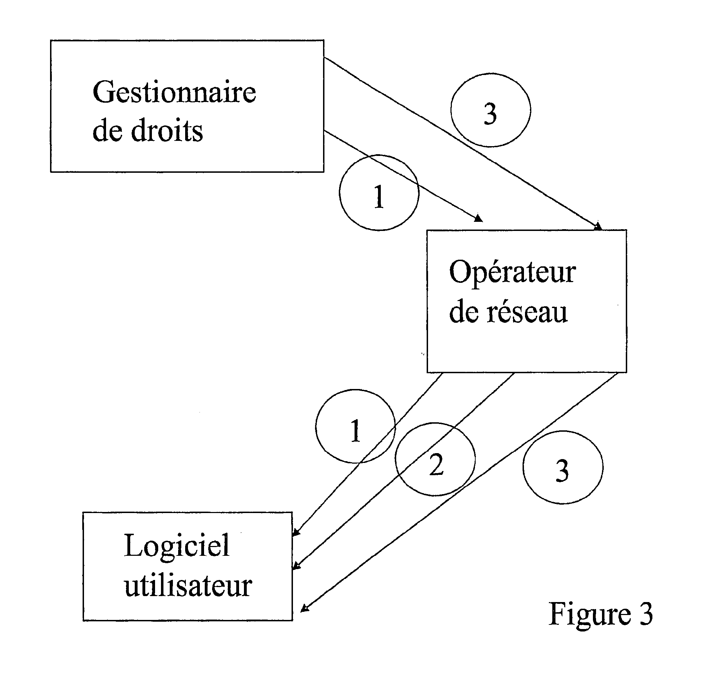

Sur les Figures 2 et 3 sont représentés les flux d'échanges de documents entre les serveurs hébergeant ces documents et le poste de l'utilisateur, dans le cas d'un réseau public puis dans le cas d'un réseau privé. Bien entendu, de nombreuses autres dispositions sont concevables, certains flux pouvant par exemple être découplés.

Sur les Figures 2 et 3, le flux référencé en 1 est le flux des documents *set-up* et *certificate,* le flux référencé en 2 est le flux des documents *topology* et *lookup*/*error* et le flux référencé en 3 est le flux des documents *status* et *update.*

L'invention est décrite dans ce qui précède à titre d'exemple. Il est entendu que l'homme du métier est à même de réaliser différentes variantes de l'invention sans pour autant sortir du cadre du brevet.

## Revendications

1. Procédé d'exploitation d'un réseau informatique, ledit réseau comportant d'une part une pluralité de serveurs informatiques et au moins un poste client muni d'un logiciel informatique spécifique pour la consultation de pages numériques, et reliant au moins deux entités distinctes : un gestionnaire de droits et un ou plusieurs opérateur(s) de réseau (x), ce procédé comprenant:
• une étape préalable d'initialisation du réseau informatique au moyen de deux documents numériques signés par le gestionnaire de droits avec une clé racine, l'un étant un certificat numérique dudit réseau et l'autre un document contenant des liens vers des pages numériques permettant d'accéder audit certificat numérique du réseau ;
• une étape d'identification de la topologie du réseau conduisant :
- à l'obtention d'une liste de serveurs,
- à l'enregistrement d'un document numérique contenant ladite liste de serveurs, ce document numérique étant signé par l'opérateur de réseau au moyen d'une clé de réseau, et
- à l'attribution à chacun des serveurs de ladite liste de serveurs d'un coefficient notamment représentatif de sa capacité de traitement ;
• une étape de résolution d'une adresse au moyen d'un serveur d'obtention d'adresse dit serveur de *lookup,* cette étape étant mise en oeuvre au moyen de deux documents numériques, l'un destiné à la gestion d'erreurs et l'autre contenant les paramètres de l'adresse, ces documents numériques étant signés par l'opérateur de réseau au moyen de la clé de réseau ;
• une étape de consultation, à partir dudit logiciel spécifique, d'objets informatiques hébergés sur le (ou les) serveur(s) spécifié(s) dans les paramètres de l'adresse ;
• le certificat numérique de l'étape d'initialisation du réseau informatique contenant des informations de nature administrative et technique permettant à l'utilisateur d'accéder au réseau, les informations de nature technique contenant notamment la partie publique de la clé du réseau.

2. Procédé d'exploitation d'un réseau informatique selon la revendication 1, **caractérisé en ce qu'**il comporte en outre une étape préalable d'installation sur le poste client du logiciel spécifique pour la consultation de pages numériques.

3. Procédé d'exploitation d'un réseau informatique selon la revendication 1 ou 2, **caractérisé en ce qu'**il comporte en outre une étape de mise à jour sur le poste du logiciel spécifique pour la consultation de pages numériques, cette mise à jour étant gérée par un serveur informatique au moyen d'un document numérique de statut et d'un document numérique de mise à jour, ces documents étant signés par le gestionnaire de droits au moyen de la clé racine et ces documents étant en outre spécifiques à la plate-forme du poste client.

4. Procédé d'exploitation d'un réseau informatique selon l'une quelconque des revendications précédentes, **caractérisé en ce qu'**un ou plusieurs desdits serveurs informatiques sont des serveurs dédiés à l'assistance technique des utilisateurs.

5. Procédé d'exploitation d'un réseau informatique selon l'une quelconque des revendications précédentes, **caractérisé en ce qu'**en outre, il met en oeuvre des mécanismes de répartition de charge entre les différents serveurs.

6. Procédé d'exploitation d'un réseau informatique selon l'une quelconque des revendications précédentes, **caractérisé en ce qu'**en outre, il met en oeuvre des mécanismes de ré-attribution du service en cas d'indisponibilité d'un serveur.

7. Procédé d'exploitation d'un réseau informatique selon l'une quelconque des revendications précédentes, **caractérisé en ce qu'**un des paramètres de l'adresse est un indicateur numérique filtrant prenant en compte le contenu de pages numériques correspondantes, par exemple mais non exclusivement dans le but de gérer l'autorisation de la consultation de ces pages en fonction de l'age de l'utilisateur.

8. Procédé d'exploitation d'un réseau informatique selon l'une quelconque des revendications précédentes, **caractérisé en ce que** l'activité dudit opérateur se situe au niveau d'un réseau public, par exemple le réseau Internet.

9. Procédé d'exploitation d'un réseau informatique selon l'une quelconque des revendications 1 à 8, **caractérisé en ce que** l'activité dudit opérateur se situe au niveau d'au moins un réseau informatique privé.

10. Procédé d'exploitation d'un réseau informatique selon l'une quelconque des revendications précédentes, **caractérisé en ce que** les documents numériques possèdent un format compatible XML.

11. Procédé d'exploitation d'un réseau informatique selon l'une quelconque des revendications précédentes, **caractérisé en ce que** le logiciel spécifique sur le poste client distingue différents réseaux lors d'une phase d'identification et rend possible une utilisation simultanée des différents réseaux informatiques.

12. Procédé d'exploitation d'un réseau informatique selon l'une quelconque des revendications précédentes, **caractérisé en ce que** le gestionnaire de droits se décompose en une pluralité de gestionnaires de droits.

13. Procédé d'exploitation d'un réseau informatique selon l'une quelconque des revendications précédentes, **caractérisé en ce qu'**il met en oeuvre un cache, par exemple mais non nécessairement au niveau dudit logiciel spécifique pour la consultation sur le poste client.

14. Procédé d'exploitation selon la revendication 13, **caractérisé en ce que** ledit cache possède une double durée de validité : une relative par rapport à un événement donné et une absolue, qui correspond à une date d'expiration prédéterminée.

15. Procédé d'exploitation selon la revendication 14, **caractérisé en ce que** ledit événement est le chargement d'un desdits documents numériques.

16. Procédé d'exploitation d'un réseau informatique selon l'une quelconque des revendications précédentes, **caractérisé en ce que** ladite liste de serveurs comporte en outre des indicateurs représentatifs de la localisation géographique desdits serveurs.

17. Procédé d'exploitation d'un réseau informatique selon l'une quelconque des revendications précédentes, **caractérisé en ce que** l'étape d'initialisation du réseau informatique est mise en oeuvre de façon automatique et est réalisée uniquement au moyen dudit certificat numérique.

18. Procédé d'exploitation d'un réseau informatique selon la revendication 17, **caractérisé en ce que** l'étape d'initialisation du réseau informatique mise en oeuvre de façon automatique utilise des adresses pré-determinées.

19. Procédé d'exploitation d'un réseau informatique selon l'une quelconque des revendications précédentes, **caractérisé en ce qu'**à l'étape d'identification de la topologie du réseau, le document numérique est signé par le gestionnaire de droits au moyen de la clé de réseau, cette clé de réseau étant alors conservée par le gestionnaire de droits.

20. Procédé d'exploitation d'un réseau informatique selon l'une quelconque des revendications précédentes, **caractérisé en ce qu'**à l'étape de résolution d'adresse, les documents numériques sont signés par le gestionnaire de droits au moyen de la clé de réseau, cette clé de réseau étant alors conservée par le gestionnaire de droits.

21. Procédé d'exploitation d'un réseau informatique selon l'une quelconque des revendications précédentes, **caractérisé en ce qu'**il comporte en outre une étape de validation de la partie publique de la clé de réseau, par la fourniture de la signature d'une chaîne de caractères prédéterminée au moyen de la clé de réseau.

22. Procédé d'exploitation d'un réseau informatique selon l'une quelconque des revendications précédentes, **caractérisé en ce que** chaque document numérique possède un identifiant unique déterminé en partie par le gestionnaire de droits et en partie par l'opérateur de réseau.

23. Procédé d'exploitation d'un réseau informatique selon l'une quelconque des revendications précédentes, **caractérisé en ce que**, pour chacun des documents numériques, la signature est incluse dans le document.

24. Procédé d'exploitation d'un réseau informatique selon l'une quelconque des revendications précédentes, **caractérisé en ce que**, pour chacun des documents numériques, la signature est référencée par le document et n'est pas incluse dans le document.

25. Procédé d'exploitation d'un réseau informatique selon l'une quelconque des revendications précédentes, **caractérisé en ce que** les paramètres de l'adresse définissent si un utilisateur doit s'authentifier ou non pour accéder à un contenu, et s'il doit s'authentifier, par quel moyen il devra l'effectuer.

26. Procédé d'exploitation d'un réseau informatique selon l'une quelconque des revendications précédentes, **caractérisé en ce que** les paramètres de l'adresse définissent le format du contenu à publier.

27. Procédé d'exploitation d'un réseau informatique selon l'une quelconque des revendications précédentes, **caractérisé en ce que** des couleurs différentes peuvent être utilisées dans l'affichage des adresses des différents réseaux informatiques.

28. Procédé d'exploitation d'un réseau informatique selon l'une quelconque des revendications précédentes, **caractérisé en ce que** le document numérique contenant les paramètres de l'adresse contient en outre un certificat destiné à authentifier un serveur de contenu.

29. Procédé de communication numérique entre au moins deux équipements sur un réseau informatique exploité conformément au procédé d'exploitation selon l'une au moins des revendications précédentes, **caractérisé en ce que** lors d'au moins une des étapes dudit procédé d'exploitation, les données numériques échangées entre les deux équipements comportent au moins une adresse dont le format possède un en-tête correspondant au nom du réseau et un descripteur déterminé par un producteur de contenu.

30. Procédé de communication numérique selon la revendication 29, **caractérisé en ce que** l'étape de procédé en question est l'étape de résolution d'adresse.

31. Système d'exploitation d'un réseau informatique, ledit réseau comportant d'une part une pluralité de serveurs informatiques et au moins un poste client muni d'un logiciel spécifique pour la consultation de pages numériques, et reliant au moins deux entités distinctes : un gestionnaire de droits et au moins un opérateur de réseau, pour la mise en oeuvre du procédé d'exploitation selon l'une quelconque des revendications 1 à 28.

## Claims

1. Method of operating a computer network, said network comprising, on the one hand, a plurality of computer servers, and at least one client terminal on which specific computer software is installed for consulting digital pages, and connecting at least two distinct entities: a rights manager and one or more network operator(s), said method comprising:
• a prior step of initialising the computer network by means of two digital documents signed by the rights manager with a root key, one of said documents being a digital certificate of said network and the other being a document containing links to digital pages enabling access to said digital network certificate;
• a step of identifying the topology of the network leading to:
- obtaining a list of servers,
- recording a digital document containing said server list, this digital document being signed by the network operator using a network key, and
- assigning a coefficient to each server in said server list, that is in particular representative of its processing capabilities;
• a step of resolving an address by means of an address lookup server, this step being implemented by means of two digital documents, one intended for error management and the other containing the address parameters, these digital documents being signed by the network operator using the network key;
• a step of using said specific software to consult computer objects hosted on the server(s) specified in the address parameters;
• the digital certificate of the computer network initialisation step containing administrative and technical information which enables the user to access the network, the technical information containing, in particular, the public part of the network key.

2. Method of operating a computer network according to claim 1, **characterised in that** it also comprises a prior step of installing the specific software for consulting digital pages on the client terminal.

3. Method of operating a computer network according to claim 1 or 2, **characterised in that** it also comprises a step of updating the specific software for consulting digital pages on the terminal, this update being managed by a computer server by means of a digital status document and a digital update document, these documents being signed by the rights manager using the root key and these documents also being specific to the platform of the client terminal.

4. Method of operating a computer network according to any one of the preceding claims, **characterised in that** one or more of said computer servers are servers dedicated to user technical support.

5. Method of operating a computer network according to any one of the preceding claims, **characterised in that** it also implements mechanisms for load balancing among the different servers.

6. Method of operating a computer network according to any one of the preceding claims, **characterised in that** it also implements mechanisms for re-assigning the service if a server becomes unavailable.

7. Method for operating a computer network according to any one of the preceding claims, **characterised in that** one of the address parameters is a digital filtering indicator taking into account the contents of the corresponding digital pages, for example, but not limited to, in order to manage the authorisation to consult these pages according to the age of the user.

8. Method for operating a computer network according to any one of the preceding claims, **characterised in that** the activity of said operator takes place in a public network, for example the Internet.

9. Method of operating a computer network according to any one of the claims from 1 to 8, **characterised in that** the activity of the operator takes place in at least one private computer network.

10. Method of operating a computer network according to any one of the preceding claims, **characterised in that** the digital documents are in an XML-compatible format.

11. Method of operating a computer network according to any one of the preceding claims, **characterised in that** the specific software on the client terminal makes a distinction between different networks during an identification phase and makes it possible to use different computer networks simultaneously.

12. Method of operating a computer network according to any one of the preceding claims, **characterised in that** the rights manager is broken down into a plurality of rights managers.

13. Method of operating a computer network according to any one of the preceding claims, **characterised in that** it implements a cache, for example, but not necessarily, in the specific consultation software on the client terminal.

14. Operating method according to claim 13, **characterised in that** said cache has a double validity period: one relative period in relation to a given event, and one absolute period corresponding to a predetermined expiration date.

15. Operating method according to claim 14, **characterised in that** said event is the loading of one of said digital documents.

16. Method of operating a computer network according to any one of the preceding claims, **characterised in that** said list of servers also comprises indicators representing the geographical location of said servers.

17. Method of operating a computer network according to any one of the preceding claims, **characterised in that** the computer network initialisation step is performed automatically and is only executed using said digital certificate.

18. Method of operating a computer network according to claim 17, **characterised in that** the automatically performed computer network initialisation step uses predetermined addresses.

19. Method of operating a computer network according to any one of the preceding claims, **characterised in that**, in the network topology identification step, the digital document is signed by the rights manager using the network key, this network key then being stored by the rights manager.

20. Method of operating a computer network according to any one of the preceding claims, **characterised in that**, during the address resolution step, the digital documents are signed by the rights manager using the network key, this network key then being stored by the rights manager.

21. Method of operating a computer network according to any one of the preceding claims, **characterised in that** it also comprises a step of validating the public part of the network key, by providing the signature of a predetermined character string using the network key.

22. Method of operating a computer network according to any one of the preceding claims, **characterised in that** each digital document has a unique identifier determined partly by the rights manager and partly by the network operator.

23. Method of operating a computer network according to any one of the preceding claims, **characterised in that**, for each of the digital documents, the signature is included in the document.

24. Method of operating a computer network according to any one of the preceding claims, **characterised in that**, for each of the digital documents, the signature is referenced by the document and is not included in the document.

25. Method of operating a computer network according to any one of the preceding claims, **characterised in that** the address parameters define whether or not a user must authenticate itself in order to access the contents, and if an authentication is required, the means by which it should be performed.

26. Method of operating a computer network according to any one of the preceding claims, **characterised in that** the address parameters define the format of the content to be published.

27. Method of operating a computer network according to any one of the preceding claims, **characterised in that** different colours can be used to display addresses from different computer networks.

28. Method of operating a computer network according to any one of the preceding claims, **characterised in that** the digital document containing the address parameters also contains a certificate intended to authenticate a content server.

29. Method of digital communication between at least two devices on a computer network operated in accordance with the operating method according to at least one of the preceding claims, **characterised in that**, during at least one of said steps of said operating method, the digital data exchanged between the two devices comprise at least one address, the format of which has a header corresponding to the name of the network and a descriptor determined by a content provider.

30. Digital communication method according to claim 29, **characterised in that** the step of the method in question is the address resolution step.

31. Computer network operating system, said network comprising, on the one hand, a plurality of computer servers and at least one client terminal on which specific software is installed for consulting digital pages, and connecting at least two distinct entities: a rights manager and at least one network operator, for implementing the operating method according to any one of the claims from 1 to 28.

## Patentansprüche

1. Verfahren für den Betrieb eines Informatiknetzes, wobei das besagte Netz einerseits mehrere Informatik-Server und mindestens einen Kundenposten umfaßt, der mit einer spezifischen IT-Software für die Abfrage von digitalen Seiten versehen ist, und das mindestens zwei ferne Einheiten verbindet: einen Rechtemanager und einen oder mehrere Netzbediener, wobei dieses Verfahren folgendes umfaßt:
. Eine Vorstufe für die Initialisierung des Informatiknetzes vermittels von zwei digitalen Dokumenten, die vom Rechtemanager mit einem Wurzelschlüssel abgezeichnet sind, wobei das eine ein digitales Zertifikat des besagten Netzes und das andere digitale Seiten sind, mit denen Zugriff auf das besagte digitale Zertifikat des Netzes gegeben wird;
. Eine Stufe für die Identifizierung der Topologie des Netzes, die zu folgendem führt:
- Zum Erhalt einer Liste der Server,
- Zur Aufzeichnung eines digitalen Dokuments, das die besagte Liste der Server enthält, wobei dieses digitale Dokument vom Netzbetreiber mit einem Netzschlüssel abgezeichnet wird,
- Zur Zuweisung an jeden der Server der besagten Serverliste eines Koeffizienten, der insbesondere repräsentativ für Verarbeitungskapazität ist;
. Einen Schritt für die Auflösung einer Adresse vermittels eines Servers für den Erhalt einer Adresse, der sogenannte *Lookup* Server, wobei dieser Schritt vermittels von zwei digitalen Dokumenten eingesetzt wird, von denen das eine für das Fehlermanagement bestimmt ist und das andere die Parameter der Adresse enthält, wobei diese beiden digitalen Dokumente vom Netzbetreiber mit dem Netzschlüssel abgezeichnet werden;
. Einen Schritt zur Abfrage, ausgehend von besagter spezifischer Software, von IT-Objekten, die auf dem (oder den) Server(n) untergebracht sind, der(die) in den Parametern der Adresse spezifiziert ist(sind);
. Das digitale Zertifikat des Schritts zur Initialisierung des IT-Netzes, das Informationen verwalterischer und technischer Art enthält, mit denen der Benutzer zum Netz zugreifen kann, wobei die Informationen technischer Art insbesondere den öffentlichen Teil des Netzschlüssels enthalten.

2. Verfahren für den Betrieb eines Informatiknetzes nach Anspruch 1, **dadurch gekennzeichnet, daß** es ferner einen vorherigen Schritt für den Einbau der spezifischen Software auf dem Kundenposten für die Abfrage von digitalen Seiten umfaßt.

3. Verfahren für den Betrieb eines Informatiknetzes nach Anspruch 1 oder 2, **dadurch gekennzeichnet, daß** es außerdem einen Schritt mit Aktualisierung der spezifischen Software für die Abfrage von digitalen Seiten auf dem Kundenposten umfaßt, wobei diese Aktualisierung durch einen Digitalserver vermittels eines digitalen Statusdokuments und eines digitalen Aktualisierungsdokuments gemanagt wird, wobei diese Dokumente vom Rechtemanager vermittels des Wurzelschlüssels abgezeichnet sind, und außerdem spezifisch für die Plattform des Kundenpostens sind.

4. Verfahren für den Betrieb eines Informatiknetzes nach einem beliebigen der vorstehenden Ansprüche, **dadurch gekennzeichnet, daß** einer oder mehrerer der besagten IT-Server für die technische Unterstützung der Benutzer bestimmte Server sind.

5. Verfahren für den Betrieb eines Informatiknetzes nach einem beliebigen der vorstehenden Ansprüche, **dadurch gekennzeichnet, daß** es ferner Mechanismen für die Lastverteilung zwischen den einzelnen Servern einsetzt.

6. Verfahren für den Betrieb eines Informatiknetzes nach einem beliebigen der vorstehenden Ansprüche, **dadurch gekennzeichnet, daß** es ferner bei Ausfall eines Servers Mechanismen für die Neuzuweisung des Service einsetzt.

7. Verfahren für den Betrieb eines Informatiknetzes nach einem beliebigen der vorstehenden Ansprüche, **dadurch gekennzeichnet, daß** einer der Parameter der Adresse ein digitaler filternder Indikator ist, der den Inhalt der entsprechenden digitalen Seiten berücksichtigt, und zwar zum Beispiel, aber nicht ausschließlich mit dem Ziel, die Genehmigung der Abfrage dieser Seiten je nach Alter des Benutzers zu managen.

8. Verfahren für den Betrieb eines Informatiknetzes nach einem beliebigen der vorstehenden Ansprüche, **dadurch gekennzeichnet, daß** sich die Tätigkeit des besagten Betreibers auf einem öffentlichen Netz befindet, um Beispiel das Internet.

9. Verfahren für den Betrieb eines Informatiknetzes nach einem beliebigen der vorstehenden Ansprüche 1 bis 8, **dadurch gekennzeichnet, daß** sich die Tätigkeit des besagten Betreibers auf Ebene mindestens eines privaten Informatiknetzes befindet.

10. Verfahren für den Betrieb eines Informatiknetzes nach einem beliebigen der vorstehenden Ansprüche, **dadurch gekennzeichnet, daß** die digitalen Dokumente ein mit XML kompatibles Format haben.

11. Verfahren für den Betrieb eines Informatiknetzes nach einem beliebigen der vorstehenden Ansprüche, **dadurch gekennzeichnet, daß** die spezifische Software auf dem Kundenposten bei einer Identifizierungsphase verschiedene Netze unterscheidet und eine gleichzeitige Benutzung der verschiedenen Informatiknetze möglich macht.

12. Verfahren für den Betrieb eines Informatiknetzes nach einem beliebigen der vorstehenden Ansprüche, **dadurch gekennzeichnet, daß** der Rechtemanager aus mehreren Rechtemanagern besteht.

13. Verfahren für den Betrieb eines Informatiknetzes nach einem beliebigen der vorstehenden Ansprüche, **dadurch gekennzeichnet, daß** es einen Cache einsetzt, und zwar zum Beispiel aber nicht notwendigerweise auf Ebene der besagten spezifischen Software für die Abfrage auf dem Kundenposten.

14. Verfahren für den Betrieb eines Informatiknetzes nach Anspruch 13, **dadurch gekennzeichnet, daß** der besagte Cache eine doppelte Gültigkeitsdauer besitzt: Eine relative gegenüber einem gegebenen Ereignis und eine absolute, die einem vorbestimmten Ablaufdatum entspricht.

15. Verfahren für den Betrieb eines Informatiknetzes nach Anspruch 14, **dadurch gekennzeichnet, daß** das besagte Beispiel das Einlesen eines der besagten digitalen Dokumente ist.

16. Verfahren für den Betrieb eines Informatiknetzes nach einem beliebigen der vorstehenden Ansprüche, **dadurch gekennzeichnet, daß** die besagte Liste der Server ferner repräsentative Angaben zur geographischen Lokalisierung der besagten Server enthält.

17. Verfahren für den Betrieb eines Informatiknetzes nach einem beliebigen der vorstehenden Ansprüche, **dadurch gekennzeichnet, daß** der Schritt der Initialisierung des Informatiknetzes automatisch erfolgt und nur vermittels des besagten digitalen Zertifikats realisiert wird.

18. Verfahren für den Betrieb eines Informatiknetzes nach Anspruch 17, **dadurch gekennzeichnet, daß** der automatisch erfolgende Schritt der Initialisierung des Informatiknetzes vorbestimmte Adressen benutzt.

19. Verfahren für den Betrieb eines Informatiknetzes nach einem beliebigen der vorstehenden Ansprüche, **dadurch gekennzeichnet, daß** beim Schritt der Identifizierung der Topologie des Netzes das digitale Dokument vom Rechtemanager vermittels des Netzschlüssels abgezeichnet wird, wobei der Netzschlüssel dann vom Rechtemanager aufgehoben wird.

20. Verfahren für den Betrieb eines Informatiknetzes nach einem beliebigen der vorstehenden Ansprüche, **dadurch gekennzeichnet, daß** beim Schritt der Adressenauflösung die digitalen Dokumente vom Rechtemanager vermittels des Netzschlüssels abgezeichnet werden, wobei der Netzschlüssel dann vom Rechtemanager aufgehoben wird.

21. Verfahren für den Betrieb eines Informatiknetzes nach einem beliebigen der vorstehenden Ansprüche, **dadurch gekennzeichnet, daß** es außerdem einen Schritt zur Bestätigung des öffentlichen Teils des Netzschlüssels umfaßt, und zwar durch die Stellung der Abzeichnung einer vorbestimmten Zeichenkette vermittels des Netzschlüssels.

22. Verfahren für den Betrieb eines Informatiknetzes nach einem beliebigen der vorstehenden Ansprüche, **dadurch gekennzeichnet, daß** jedes digitale Dokument eine einzige ID hat, die zum Teil vom Rechtemanager und zum Teil vom Netzbetreiber bestimmt wird.

23. Verfahren für den Betrieb eines Informatiknetzes nach einem beliebigen der vorstehenden Ansprüche, **dadurch gekennzeichnet, daß** bei jedem der digitalen Dokumente die Abzeichnung im Dokument enthalten ist.

24. Verfahren für den Betrieb eines Informatiknetzes nach einem beliebigen der vorstehenden Ansprüche, **dadurch gekennzeichnet, daß** für jedes der digitalen Dokumente die Abzeichnung vom Dokument referenziert wird und nicht im Dokument enthalten ist.

25. Verfahren für den Betrieb eines Informatiknetzes nach einem beliebigen der vorstehenden Ansprüche, **dadurch gekennzeichnet, daß** die Parameter der Adresse definieren, ob ein Benutzer sich authentifizieren muß oder nicht, um auf einen Inhalt zuzugreifen, und wenn er sich authentifizieren muß, mit welchem Mittel er das tun muß.

26. Verfahren für den Betrieb eines Informatiknetzes nach einem beliebigen der vorstehenden Ansprüche, **dadurch gekennzeichnet, daß** die Parameter der Adresse das Format des zu veröffentlichenden Inhalts definieren.

27. Verfahren für den Betrieb eines Informatiknetzes nach einem beliebigen der vorstehenden Ansprüche, **dadurch gekennzeichnet, daß** in der Anzeige der Adressen der einzelnen Informatiknetze unterschiedliche Farben verwendet werden können.

28. Verfahren für den Betrieb eines Informatiknetzes nach einem beliebigen der vorstehenden Ansprüche, **dadurch gekennzeichnet, daß** das digitale Dokument, das die Parameter der Adresse enthält, außerdem ein Zertifikat enthält, mit dem ein Inhaltsserver authentifiziert werden soll.

29. Verfahren für die digitale Kommunikation zwischen mindestens zwei Ausrüstungen auf einem Informatiknetz, das nach dem Verfahren für den Betrieb nach mindestens einem der vorstehenden Ansprüche betrieben wird, **dadurch gekennzeichnet**, das bei mindestens einem der Schritte des besagten Verfahrens für den Betrieb die zwischen den beiden Ausrüstungen ausgetauschten digitalen Daten mindestens ein Adresse enthalten, deren Format eine Kopfzeile besitzt, die dem Namen des Netzes entspricht, und einen von einem Inhaltserzeuger bestimmten Beschreiber.

30. Verfahren für die digitale Kommunikation nach Anspruch 29, **dadurch gekennzeichnet, daß** der betroffene Verfahrensschritt der Schritt mit der Lösung der Adresse ist.

31. Verfahren für den Betrieb eines Informatiknetzes, wobei das besagte Netz einerseits mehrere Informatik-Server und mindestens einen Kundenposten umfaßt, der mit einer spezifischen Software für die Abfrage von digitalen Seiten versehen ist, und das mindestens zwei ferne Einheiten verbindet: einen Rechtemanager und mindestens einen Netzbediener, für den Einsatz des Verfahrens für den Betrieb nach einem beliebigen der vorstehenden Ansprüche 1 bis 28.
